# EUROPÄISCHE PATENTSCHRIFT

(11) **EP 1 934 075 B1**
(45) Veröffentlichungstag und Bekanntmachung des Hinweises auf die Patenterteilung: **23.06.2010**
(21) Anmeldenummer: 06806236.3
(22) Anmeldetag: 12.10.2006
(51) Int. Cl.: B60T 8/1755, B60T 8/88, B60T 8/173

(54) **ELEKTRONISCHES FAHRDYNAMIKREGELUNGSSYSTEM FÜR EIN LANDFAHRZEUG**
ELECTRONIC STABILITY PROGRAM FOR A LAND VEHICLE
SYSTEME DE REGULATION ELECTRONIQUE DU COMPORTEMENT DYNAMIQUE CONÇU POUR UN VEHICULE ROUTIER

(30) Priorität: 13.10.2005 DE 102005049083
(43) Veröffentlichungstag der Anmeldung: 25.06.2008
(73) Patentinhaber: Lucas Automotive GmbH, 56070 Koblenz (DE)
(72) Erfinder: KNECHTGES, Josef, 56727 Mayen (DE)
(74) Vertreter: Schmidt, Steffen
(86) Internationale Anmeldenummer: PCT/EP2006/009882
(87) Internationale Veröffentlichungsnummer: WO 2007/042305

(56) Entgegenhaltungen:
- WO-A-2004/041612
- DE-A1- 10 236 331
- DE-A1- 10 251 949
- DE-A1- 19 525 217

## Beschreibung

### Hintergrund der Erfindung

Die Erfindung betrifft ein elektronisches Fahrdynamikregelungssystem für ein Landfahrzeug, das zumindest zum Lenk- und Bremseingriff eingerichtet ist. Derartige Systeme erlauben die Bereitstellung einer Vielzahl von Funktionalitäten, wie sie durch heutige Systeme mit integriertem Brems- und Motoreingriff nicht möglich sind (zum Beispiel Giermomentenkompensation beim Bremsen auf µₛₚₗᵢₜ).

Dabei kann der Lenkeingriff durch das Fahrdynamikregelungssystem sowohl auf Fremdkraftlenkanlagen, bei denen die Lenkkraft ausschließlich von einer im Fahrzeug vorhandenen Energiequelle aufgebracht wird, als auch auf Hilfskraftlenkanlagen, bei denen die Lenkkraft vom Fahrer und von einer im Fahrzeug vorhandenen Energiequelle aufgebracht wird, einwirken. Bei einer Überlagerungslenkung wird abhängig von vom Fahrer eingesteuerten Lenkradbewegungen und den aktuellen fahrdynamischen Größen des Fahrzeuges aktiv über Stellmotoren ein Zusatzlenkwinkel gestellt. Der Zusatzlenkwinkel wird in der Regel über ein Planetengetriebe den vom Fahrer eingesteuerten Lenkradbewegungen überlagert. Damit ist es möglich, Fahrerassistenzfunktionen (zum Beispiel eine von der Fahrzeuggeschwindigkeit abhängige variable Lenkuntersetzung) oder Stabilisierungsfunktionen (zum Beispiel Verbesserung der Fahrstabilität, Seitenwindkompensation, Gegenlenkung auf inhomogener Fahrbahn, etc.) zu realisieren. Eine mögliche Realisation eines solchen Lenkeingriffsystems ist zum Beispiel in ATZ Automobiltechnische Zeitschrift 100 (1998) 9, " Die Servolectric von ZF" beschrieben.

Der Bremseingriff kann mittels einer Bremsausrüstung erfolgen, die unabhängig vom oder zusätzlich zum Fahrer Bremskräfte aufbauen kann. Dies ist zum Beispiel mittels einer hydraulischen Bremsanlage möglich, die über eine ABS-, ASR, und/oder ESP-Funktionalität verfügt. Derartige Bremsanlagen sind in der Lage und dazu bestimmt, automatische Bremsungen auszuführen. Darunter sind Bremsvorgänge verstanden, die in der Regel unabhängig von einer vom Fahrer am Pedal eingeleiteten Kraft erfolgen. Solche sind z.B. eine Antriebsschlupfregelung (ASR), die ein Durchdrehen einzelner Räder bei einem Anfahrvorgang durch gezieltes Abbremsen verhindert, oder eine Fahrdynamikregelung (ESP), die das Fahrzeugverhalten im Grenzbereich durch gezieltes Abbremsen einzelner Räder an den Fahrerwunsch und die Fahrbahnverhältnisse anpasst, oder eine adaptive Geschwindigkeitsregelung (ACC), die unter anderem durch selbsttätiges Bremsen einen vorgegebenen Abstand des eigenen Fahrzeugs zu einem vorausfahrenden Fahrzeug einhält.

Die Aufbereitung der von dem Fahrdynamikregelungssystem verarbeiteten Sensorsignale, die Berechnung der fahrdynamischen Sollgrößen und die Vorgabe der jeweiligen Stellgrößen erfolgt dabei in der Regel durch jedes der Regelsysteme separat auf getrennten Steuergeräten. Aus den so ermittelten Vorgaben werden dann Informationen erzeugt, die zwischen den einzelnen Regelsystemen ausgetausscht werden. Beispielsweise benötigt das ESP zur Berechnung der Soll-Fahrzeugbewegungsgrößen Informationen über den Summenlenkwinkel und den tatsächlich vorliegenden Radlenkwinkel. Gegenüber bisherigen ESP-Systemen kann dabei weitgehend auf Modifikationen der ESP-Algorithmen verzichtet werden. Dabei wird der sicherheitskritische Bereich des Fahrzeuges dann erreicht, wenn der Bremsdruck etwa 20 bar übersteigt.

Mit den eingangs beschriebenen elektronischen Fahrdynamikregelungssystemen ist es möglich, eine aktive Lenkung zu realisieren. Dabei werden, weitergehend als bei einer Komfortbeeinflussung von Lenkvorgängen, in den sicherheitskritischen Bereich des Fahrzeuges hinein vom Fahrer eingesteuerte Lenkradbewegungen mit einer motorisch aufgebrachten Lenkkraft überlagert oder durch diese ersetzt. Der sicherheitskritische Bereich des Fahrzeuges ist dann erreicht, wenn das der vom Fahrer eingesteuerten Lenkradbewegung zu überlagernde Lenkmoment etwa 3 Nm übersteigt, oder wenn der zu überlagernde Lenkwinkel etwa 0,4° übersteigt.

Sowohl bei bisherigen als auch bei heutigen Systemen wird aus Sicherheitsgründen eine redundante Bereitstellung der Gierwinkelgeschwindigkeits- und Querbeschleunigungssensoren für unerlässlich angesehen. Dies gilt insbesondere für Systeme, die in der Lage sind, relativ große zu überlagernde Lenkmomente oder -winkel mit hoher Dynamik zu erzeugen. Diese wenigstens zweifach vorhandenen Sensoren sind zumindest teilweise sowohl für die Fremdkraftlenkanlage bzw. deren Regelungseinheit, als auch für die ABS-, ASR, und/oder ESP-Bremsanlage jeweils separat vorhanden. Ihre Signale werden separat erfasst und ausgewertet. Im Rahmen einer Plausibilitätskontrolle der Signale werden zwischen den einzelnen Systemen bzw. deren Regelungseinheiten die Messergebnisse ausgetauscht und verglichen.

Bei signifikanter Abweichung können die Systeme einen Fehlerfall erkennen und in einen sicheren Zustand gebracht werden.

DE 19525217 offenbart ein zum Lenk- und Bremseingriff eingerichtetes elektronisches Fahrdynamikregelungssystem, das als nächstliegender Stand der Technik augesehen wird.

### Der Erfindung zugrundeliegendes Problem

Ausgehend von dieser Situation liegt der Erfindung das Problem zugrunde, bei vergleichbarer Sicherheit im Betrieb ein kostengünstigeres und im Aufbau einfacheres elektronisches Fahrdynamikregelungssystem bereitzustellen.

### Erfindungsgemäße Lösung

Die erfindungsgemäße Lösung sieht nun ein zum Lenk- und Bremseingriff eingerichtetes elektronisches Fahrdynamikregelungssystem für ein Landfahrzeug vor, das die Merkmale des Anspruchs 1 aufweist, und der eine Sensoranordnung zugeordnet ist, die für eine Lenkeingriffseinrichtung und für eine unabhängig vom oder zusätzlich zum Fahrer Bremskräfte aufbauende Bremsanlage die Gierwinkelgeschwindigkeit und/oder die Querbeschleunigung erfaßt und der Lenkeingriffseinrichtung und der Bremsanlage zuführt.

Weitere Ausgestaltungen und mögliche Modifikationen sind in den Unteransprüchen definiert und zusammen mit ihren Vorteilen in der nachfolgenden Beschreibung erläutert.

Dabei können in der Lenkeingriffseinrichtung bzw. der Bremsanlage für die die Gierwinkelgeschwindigkeit und/oder die Querbeschleunigung wiedergebenden Signale in der Lenkeingriffseinrichtung bzw. der Bremsanlage interne Plausibilitätskontrollmechanismen und/oder Selbsttests vorgesehen sind, mittels derer die Signale auf ihre Plausibilität und auf ihre Richtigkeit zu überprüfen sind.

Die internen Plausibilitätskontrollmechanismen und/oder Selbsttests beenden ihre Überprüfungen der Signale innerhalb einer Zeitspanne, die ausreicht damit die Signale als Istgrößen bei der Berechnung von fahrdynamischen Sollgrößen Eingang finden. Die Zeitspanne kann etwa 50 - 500 msec, aber auch 200 - 500 msec betragen. Dabei hat jeder einzelne Zeitwert zwischen diesen Werten als hierin offenbart zu gelten.

Die Anforderungsrate der Istgrößen in der Lenkeingriffseinrichtung ist an die Zeitspanne für die Signalüberprüfungen angepaßt. Dabei wird von der Erkenntnis Gebrauch gemacht, dass die Lenkungsaktoren deutlich schneller als die Bremsaktoren Eingriffe vornehmen können, die in den sicherheitskritischen Bereich (s.o.) gehen. Dennoch ist die Anforderungsrate der Istgrößen der Lenkeingriffseinrichtung an die Anforderungsrate der Istgrößen der Bremsanlage angepaßt. Mit anderen Worten wird die Anforderungsrate der Signale mit der Gierwinkelgeschwindigkeit und/oder der Querbeschleunigung durch die Lenkeingriffseinrichtung etwa auf das Maß reduziert, mit dem die Bremsanlage diese Signale anfordert / erhält /verarbeitet. Diese Maßnahme hat nämlich keine spürbaren Auswirkungen auf die Sicherheit oder den Komfort des Fahrdynamikregelungssystems.

Außerdem werden in der Bremsanlage während der Ausführung der Signalüberprüfungen allenfalls Bremskräfte aufgebaut, die noch kein sicherheitskritisches Niveau haben. Gleichermaßen werden in der Lenkeingriffseinrichtung während der Ausführung der Signalüberprüfungen allenfalls Lenkmomente oder Lenkwinkel aufgebaut, die noch kein sicherheitskritisches Niveau haben. Insgesamt nutzt dieses System die Erkenntnis, dass die erzielte Stellgeschwindigkeit bei unabhängig vom oder zusätzlich zum Fahrer Bremskräfte aufbauenden Bremsanlagen ausreicht um eine komfortable elektronische Fahrzeugstablisierung zu realisieren. Die hierfür erforderliche Sensorauswerte-/Überprüfungsgeschwindigkeit reicht auch aus um grundsätzlich - schneller reagierende - Lenkeingriffseinrichtungen in die Lage zu versetzen, Lenkeingriffe sicher und komfortable auszuführen; deshalb kann auf redundante Sensoranordnungen verzichtet werden indem die aus der einer Sensoranordnung stammenden, den Gierwinkelgeschwindigkeit und/oder die Querbeschleunigung wiedergebenden Signale auf ihre Plausibiltät und Richtigkeit überprüft und dann in beiden (oder auch in weiteren, zum Beispiel (E-Gas, E-Chassis Suspension, etc.)) Teilsystemen des Fahrdynamikregelungssystems als Eingangssignale für deren Regelung verwendet werden.

Dabei ist es auch möglich, die Sensoranordnung oder Teile hiervon (zum Beispiel nur den Gierwinkelgeschwindigkeitssensor oder nur den Querbeschleunigungssensor) eines der bestehenden Teilsysteme Lenkeingriffseinrichtung und Bremsanlage zu nutzen und das/die andere/n Teilsysteme von vorne herein ohne Sensoranordnungen auszurüsten. Eine andere Alternative besteht darin, sämtliche Teilsysteme ohne Sensorik in das Fahrzeug zu integrieren und über einen Datenbus (CAN, LIN, MOST oder dergl.) untereinander und mit einer Sensoranordnung zu verbinden.

### Kurze Beschreibung der Zeichnung

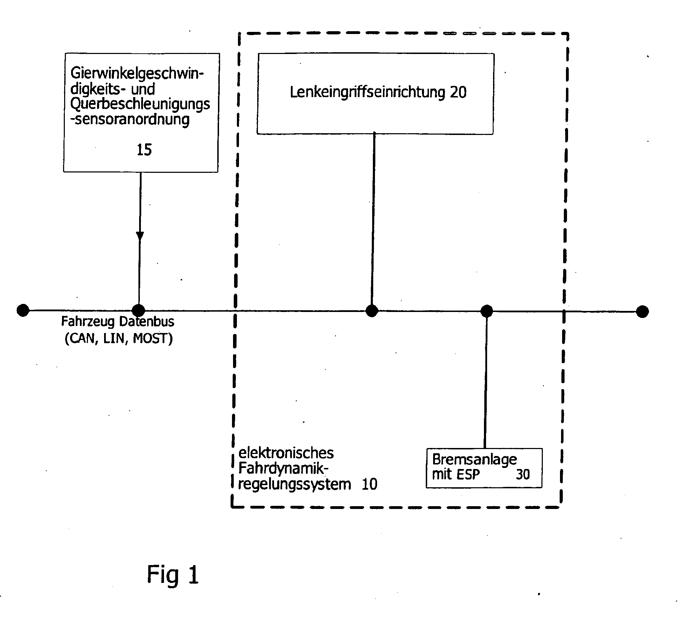

In Fig. 1 ist das Blockschalt eines Ein zum Lenk- und Bremseingriff eingerichtetes elektronisches Fahrdynamikregelungssystem für ein Landfahrzeug mit zugeordneter Sensoranordnung schematisch dargestellt.

### Detaillierte Beschreibung des Ausführungsbeispiels

Fig. 1 zeigt ein zum Lenk- und Bremseingriff eingerichtetes elektronisches Fahrdynamikregelungssystem 10 für ein Landfahrzeug, die eine Lenkeingriffseinrichtung 20 und eine unabhängig vom und zusätzlich zum Fahrer Bremskräfte aufbauende Bremsanlage 30 hat. Diesem Fahrdynamikregelungssystem 10 ist eine Sensoranordnung 15 zugeordnet, die die Gierwinkelgeschwindigkeit und/oder die Querbeschleunigung erfaßt und der Lenkeingriffseinrichtung 20 und der Bremsanlage 30 zuführt. Im vorliegenden Fahrdynamikregelungssystem ist die Sensoranordnung 15 wie alle anderen Komponenten des über einen Fahrzeugbus (CAN, MOST, LIN, oder dergl.) mit den übrigen Komponenten zur Daten/ Signalübertragung gekoppelt.

Sowohl in der Lenkeingriffseinrichtung 20 als auch in der Bremsanlage 30 sind für Signale, welche die Gierwinkelgeschwindigkeit und die Querbeschleunigung wiedergeben, interne Plausibilitätskontrollmechanismen und/oder Selbsttests vorgesehen. Diese internen Plausibilitätskontrollmechanismen und Selbsttests sind so gestaltet und programmiert, dass sie innerhalb einer Zeitspanne von etwa 50 - 500 msec ihre Überprüfungen der Signale beenden. Dies ist ausreichend damit die Signale als Istgrößen bei der Berechnung von fahrdynamischen Sollgrößen Eingang finden und vorher ihre Plausibilität und ihre Richtigkeit geprüft wurde.

Das Konzept ist vorteilhaft auch im Rahmen eines zentralen Fahrdynamikreglers (global Chassis Control GCC) einzusetzen, bei dem für alle in die Fahrdynamik eingreifenden Systeme ein korrigierendes Giermoment (und ggf. andere Kräfte/Momente) ermittelt wird. In einem Kräfte-/Momentenverteiter wird anschließend entschieden, in welcher Form und in welchem Zusammenspiel diese ermittelten Soll-Fahrzeugwerte durch die unterschiedlichen Teilsysteme von deren jeweiligen einzelnen Aktoren (Radbremsen, Lenksteller, Drosselklappensteller, Federbeinsteller, etc.) umgesetzt wird. Dies ermöglicht eine sehr effiziente, energiesparende und ganzheitliche Umsetzung der Anforderungen aus dem Betrieb des Fahrzeuges.

## Patentansprüche

1. Ein zum Lenk- und Bremseingriff eingerichtetes elektronisches Fahrdynamikregelungssystem (10) für ein Landfahrzeug, wobei dem Fahrdynamikregelungssystem eine Sensoranordnung (15) zugeordnet ist, die für eine Lenkeingriffseinrichtung (20) und für eine unabhängig, vom oder zusätzlich zum Fahrer Bremskräfte aufbauende Bremsanlage (30) die Gierwinkelgeschwindigkeit und/oder die Querbeschleunigung erfaßt und der Lenkeingriffseinrichtung (20) und der Bremsanlage (30) zuführt, **dadurch gekennzeichnet, dass** für die die Gierwinkelgeschwindigkeit und/oder die Querbeschleunigung wiedergebenden Signale in der Lenkengriffseinrichtung (20) oder der Bremsanlage (30) interne Plausibilitätskontrollmechanismen und/oder Selbsttests vorgesehen sind, mittels derer die Signale auf ihre Plausibilität und auf ihre Richtigkeit zu überprüfen sind, die internen Plausibilitätskontrollmechanismen und/oder Selbsttests innerhalb einer Zeitspanne ihre Überprüfungen der Signale beenden, die ausreicht damit die Signale als Istgrößen bei der Berechnung von fahrdynamischen Sollgrößen Eingang finden, und das die Anforderungsrate der Istgrößen der Lenkeingriffseinrichtung (20) an die Anforderungsrate der Istgrößen, der Bremsanlage (30) angepaßt ist.

2. Das Fahrdynamikregelungssystem nach Anspruch 1, bei dem die Zeitspanne 50 - 500 msec beträgt.

3. Das Fahrdynamikregelungssystem nach einem der vorhergehenden Ansprüche, bei dem die Anforderungsrate der Istgrößen in der Lenkeingriffseinrichtung (20) an die Zeitspanne für die Signalüberprüfungen angepaßt ist.

4. Das Fahrdynamikregelungssystem nach einem der vorhergehenden Ansprüche, bei dem in der Bremsanlagen (30) während der Ausführung der Signalüberprüfungen allenfalls Bremskräfte aufgebaut werden, die noch kein sicherheitskritisches Niveau haben.

5. Das Fahrdynamikregelungssystem nach einem der vorhergehenden Ansprüche, bei dem in der Lenkeingriffseinrichtung (20) während der Ausführung der Signalüberprüfungen allenfalls Lenkmomente oder Lenkwinkel aufgebaut werden, die noch kein sicherheitskritisches Niveau haben.

## Claims

1. An electronic vehicle dynamics regulation system (10) for a land vehicle, that is set up for steering and braking intervention, and with which a sensor arrangement (15) is associated, which captures for a steering intervention device (20) and for a braking system (30) which builds up braking forces independently of or in addition to the driver the yaw angular velocity and/or the transverse acceleration and feeds them to the steering intervention device (20) and braking system (30), **characterized in that** for the signals which reproduce the yaw angular velocity and/or transverse acceleration, internal plausibility check mechanisms and/or self tests and provided, by means of which the signals are to be checked in regards of their plausibility and correctness, that the internal plausibility check mechanisms and/or self tests end their checking of the signals within a period which is sufficient so that the signals, enter the calculation of vehicle-dynamic set point magnitudes, as actual magnitudes, and that the request rate of the actual magnitudes of the steering intervention device (20) is adapted to the request rate of the actual magnitudes of the braking system (30).

2. The vehicle dynamics regulation system according to Claim 1, wherein the period is 50 - 500 msec.

3. The vehicle dynamics regulation system according to one of the preceding claims, wherein the request rate of the actual magnitudes in the steering intervention device (20) is adapted to the period for the signal checks.

4. The vehicle dynamics regulation system according to one of the preceding claims, wherein in the braking system (30), during the execution of the signal checks, at most braking forces which do not yet have a safety-critical level are built up.

5. The vehicle dynamics regulation system according to one of the preceding claims, wherein in the steering intervention device (20), during the execution of the signal checks, at most steering moments or steering angles which do not yet have a safety-critical level are built up.

## Revendications

1. Système de régulation électronique du comportement dynamique (10) conçu pour un véhicule routier et configuré pour intervenir sur la direction et sur le freinage dudit véhicule, un dispositif de détection (15) étant associé audit système de régulation du comportement dynamique, lequel dispositif détecte la vitesse angulaire d'embardée et/ou l'accélération transversale pour un dispositif d'intervention sur la direction (20) et pour un système de freinage (30) qui génère des forces de freinage indépendamment ou en complément de celles générées par le conducteur, et introduit la vitesse angulaire d'embardée et/ou l'accélération transversale dans ledit dispositif d'intervention sur la direction (20), et ledit système de freinage (30), **caractérisé en ce qu'**il est prévu, pour les signaux reproduisant la vitesse angulaire d'embardée et/ou l'accélération transversale dans le dispositif d'intervention sur la direction (20) ou dans le système de freinage (30), des mécanismes de contrôle de plausibilité internes et/ou des tests automatiques permettant de vérifier la plausibilité et l'exactitude desdits signaux, lesdits mécanismes de contrôle de plausibilité internes et/ou lesdits tests automatiques cessent leurs vérifications en un laps de temps s'avérant suffisant pour que les signaux puissent entrer en tant que grandeurs réelles dans le calcul de grandeurs théoriques pour le comportement dynamique du véhicule et **en ce que** le taux de demande de grandeurs réelles du dispositif d'intervention sur la direction (20) est adapté au taux de demande de grandeurs théoriques du système de freinage (30).

2. Système de régulation du comportement dynamique selon la revendication 1, dans le cadre duquel le laps de temps est compris entre 50 et 500 msec.

3. Système de régulation du comportement dynamique selon l'une des revendications précédentes, dans le cadre duquel le taux de demande de grandeurs réelles dans le dispositif d'intervention sur la direction (20) est adapté au laps de temps destiné aux processus de vérification des signaux.

4. Système de régulation du comportement dynamique selon l'une des revendications précédentes, dans le cadre duquel tout au plus des forces de freinage de niveau encore non critique en termes de sécurité seront générées dans le système de freinage (30) au cours des processus de vérification des signaux.

5. Système de régulation du comportement dynamique selon l'une des revendications précédentes, dans le cadre duquel tout au plus des couples de direction ou des angles de direction de niveau encore non critique en termes de sécurité sont générés dans le système de freinage (30) au cours des processus de vérification des signaux.
